# EUROPEAN PATENT APPLICATION

(11) **EP 1 111 560 A1**
(43) Date of publication of application: **27.06.2001**
(21) Application number: 00310433.8
(22) Date of filing: 24.11.2000
(51) Int. Cl.: G07F 19/00, G07F 7/02

(54) **Payment system**

(30) Priority: 26.11.1999 GB 9927939; 11.01.2000 GB 0000433
(71) Applicant: Netcard Cash Limited, Congleton, Cheshire CW12 2HT (GB)
(72) Inventor: Tolley, Paul Stephen, Cheshire , CW12 2HT (GB)
(74) Representative: Swindell & Pearson

(57) **Abstract**

A payment system, the system including a plurality of specific value cards each bearing a unique identification number. The cards can be purchased, and at this point the unique identification is read at a vending station and a signal sent to a central database. The cards can be spent for instance over the internet, and at this time the cards are cancelled by the sending of an appropriate signal including the unique identification number to the central database by the receiver of the payment.

## Description

This invention concerns a payment system and apparatus usable in such a system.

An ever increasing amount of products and services are being purchased by mail order, telephone and particularly over the Internet. Conventionally, the latter two are usually paid for by credit card. It is often not considered desirable to provide credit card details for such purposes as they may be fraudulently used by an unauthorised person. This can be a particular fear with the Internet where it can be very difficult to identify the address and often even the location of a party offering a service or product. Furthermore, many people do not wish or cannot have credit cards, for instance as they may exceed their credit limit, may have been refused credit, or may be too young.

According to the present invention there is provided a payment system, the payment system comprising a plurality of purchasing unit means which can be issued and have a predetermined value or values, activating means operable when a purchasing unit means is issued, means for checking the activating means to establish whether a purchasing unit means has been issued, and means for cancelling part or all of the issuance when part or all of the purchasing unit means is spent.

The purchasing unit means is preferably allocated a unique identification, such as a unique, and desirably randomly generated, number.

The purchasing unit means can be provided electronically, and may be such that a purchaser can print the purchasing unit means.

Alternatively, the purchasing member may comprise a physical member which may comprise a card. The purchasing unit means preferably includes a visually readable unique identification, and may also comprise a machine readable unique identification, which may be the same or different. The machine readable identification may be in the form of a magnetic strip, barcode, 'glif', intelligent or optical character recognition. Purchasing unit means with different predetermined values may be provided.

Means may be provided to permit a purchaser of a purchasing unit means to allocate a unique security code to the purchasing unit means, which security code is required to be given to enable the purchasing unit means to be spent.

Where the purchasing unit means comprises a physical member, the member may comprise a detachable part, which part may bear the unique security code.

The activating means preferably comprises an accessible database which records the unique identifications of the purchasing unit means and an indication as to whether the purchasing unit means have been issued and whether the issuance has yet been cancelled.

The activating means may comprise a plurality of discrete vending stations where purchasing unit means can be purchased or otherwise distributed, and simultaneously issued, with a signal being sent to the database that the particular purchasing unit means has been issued. The activating means may be arranged to be operable only at certain hours, or only operable at certain hours for particular vending stations, to provide additional security.

The cancelling means may comprise a plurality of discrete purchasing stations where the identification of purchasing unit means can be read or inputted, and a signal sent to the database to cancel part or all of the issuance of the purchasing member.

Means may be provided to permit the uncancelled values of two or more purchasing unit means to be combined, and desirably on a fresh purchasing unit means.

The invention also provides apparatus usable in a purchasing system according to any of the preceding ten paragraphs.

The invention still further provides a purchasing unit means usable with a system according to any of said preceding ten paragraphs.

An example of a payment system and apparatus usable in it, according to the invention, will now be described by way of example only.

A plurality of purchasing members are provided in the form of cards similar to conventional credit cards. Each of the cards is allocated a specific value such as £5 or £10 and bears a magnetic strip with a unique randomly generated identification number thereon. The cards also bear a visually readable number which can be inputted into a computer or read out over a telephone. Whilst this number could be the same as that held by the magnetic strip, in general this would be a different number to provide extra security.

The cards can be purchased from a number of vending stations which could for example, be located in Post Offices, shops, banks, petrol stations, etc. When a purchasing member is sold, the unique identification is automatically read at the vending station and a signal sent to a central database that the particular purchasing member has been issued.

The purchasing member can be spent in locations or more likely over the telephone or by using the Internet or other electronic means. The purchasing member can be spent by providing the visually readable unique identification number which can be transmitted to the database to cause the issuance to be wholly or partially cancelled, depending on the cost of the services or products being bought relative to the value of the purchasing member.

There is thus described a payment system which permits purchasing members to be bought with cash if necessary and used as cash but in situations where cash traditionally cannot be used, i.e. over the telephone or over the Internet. The system is restricted to the value of the purchasing members and thus a user's potential losses are only of the value of the purchasing members. This enables persons who choose not or cannot have a credit card to purchase goods and services by methods which otherwise would not be feasible.

The system has other advantages of conventional cash transactions in that there are no statements required to the user and no possibility of junk mail being received or the like. The system also permits anonymous purchase of items which can be desirable or appropriate in certain circumstances. It is to be realised that this system is operable on a world-wide basis and can operate with different currencies or a single unique currency with appropriate conversions to national and regional currencies. By providing unique identification numbers on the purchasing members, refunds can be given if appropriate.

Various modifications may be made without departing from the scope of the invention. For instance the purchasing member may take a different form, and may not have a physical form but could rather just have an electronic form which could be transmitted to the purchaser. The electronic form may be provided on a computer, television, telephone, personal organiser etc. The purchaser may be able to print off a purchasing member, with or without any of the 'tear off element', the value, or the identification number.

The unique identification number or numbers could be read in different ways. The unique identification may be machine readable and may be in the form of a magnetic strip, barcode, 'glif', intelligent or optical character recognition. Rather than be sold such purchasing members, could be issued or awarded in various other circumstances. A unique security number could be allocated to each purchasing member, which number could be chosen by the purchaser. Where the purchasing member is in the form of a card the security number could be provided on a detachable and perhaps detachable part of the card which could be torn off, and which would allow the purchaser to store it separately. The system may be arranged such that part used purchasing members can be combined to form a fresh purchasing member or members of a relevant amount.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A payment system, the payment system comprising a plurality of purchasing unit means which can be issued and have a predetermined value or values, activating means operable when a purchasing unit means is issued, means for checking the activating means to establish whether a purchasing unit means has been issued, and means for cancelling part or all of the issuance when part or all of the purchasing unit means is spent.

2. A system according to claim 1, characterised in that the purchasing unit means is allocated a unique identification, such as a unique, and desirably randomly generated, number.

3. A system according to claims 1 or 2, characterised in that the purchasing unit means is provided electronically, and may be such that a purchaser can print the purchasing unit means.

4. A system according to claims 1 or 2, characterised in that the purchasing member comprises a physical member which may comprise a card.

5. A system according to any of the preceding claims, characterised in that the purchasing unit means includes a visually readable unique identification, and may also comprise a machine readable unique identification, which may be the same or different.

6. A system according to claim 5, characterised in that the machine readable identification is in the form of a magnetic strip, barcode, 'glif', intelligent or optical character recognition.

7. A system according to any of the preceding claims, characterised in that purchasing unit means with different predetermined values are provided.

8. A system according to any of the preceding claims, characterised in that means are provided to permit a purchaser of a purchasing unit means to allocate a unique security code to the purchasing unit means, which security code is required to be given to enable the purchasing unit means to be spent.

9. A system according to claim 8 when dependent on claim 4, characterised in that the physical member comprises a detachable part, which part may bear the unique security code.

10. A system according to any of the preceding claims, characterised in that the activating means comprises an accessible database which records the unique identifications of the purchasing unit means and an indication as to whether the purchasing unit means have been issued and whether the issuance has yet been cancelled.

11. A system according to claim 10, characterised in that the activating means comprises a plurality of discrete vending stations where purchasing unit means can be purchased or otherwise distributed, and simultaneously issued, with a signal being sent to the database that the particular purchasing unit means has been issued.

12. A system according to claims 10 or 11, characterised in that the cancelling means comprises a plurality of discrete purchasing stations where the identification of purchasing unit means can be read or inputted, and a signal sent to the database to cancel part or all of the issuance of the purchasing member.

13. A system according to any of the preceding claims, characterised in that means are provided to permit the uncancelled values of two or more purchasing unit means to be combined, and desirably on a fresh purchasing unit means.

14. A purchasing unit means usable with a system according to any of the preceding claims.
